# EUROPÄISCHE PATENTANMELDUNG

(11) **EP 1 516 787 A1**
(43) Veröffentlichungstag der Anmeldung: **23.03.2005**
(21) Anmeldenummer: 04020256.6
(22) Anmeldetag: 25.08.2004
(51) Int. Cl.: B60R 21/34

(54) **Anordnung einer Frontklappe an einem Fahrzeug**

(30) Priorität: 16.09.2003 DE 10342717
(71) Anmelder: Bayerische Motoren Werke Aktiengesellschaft, 80809 München (DE)
(72) Erfinder: Köstler, Ulrich, 85241 Hebertshausen (DE); Tietel, Andreas, 81375 München (DE); Fichtinger, Gerhard, 81541 München (DE); Schmitt, Torsten, 81829 München (DE); Dockweiler, Achim, 81829 München (DE)

(57) **Zusammenfassung**

Um bei einer Kollision eines Fußgängers oder Radfahrers mit einem Kraftfahrzeug das Ausmaß von Verletzungen, insbesondere im Brust- und Kopfbereich, zu minimieren, ist es allgemein bekannt, einen relativ großen Abstand zwischen einer Frontklappe und einer steifen Unterstruktur des Fahrzeugs vorzusehen, sodass ein ausreichender Deformationsweg der Frontklappe zur Verfügung steht, um den Aufprall des Fußgängers oder Radfahrers auf ein verträgliches Maß zu verzögern. Kritisch bleibt allerdings der Bereich der Frontklappe nahe bei Scharnieren, mit denen die Frontklappe an die Karosserie angelenkt ist, da die Frontklappe in diesem Bereich nicht ausreichend deformierbar ist.

Erfindungsgemäß ist eine Frontklappe mit zumindest einer Scharniereinrichtung **(1)** mit der Karosserie verbunden ist, wobei die geschlossene Frontklappe zu den darunter angeordneten Aggregaten einen Mindestabstand aufweist. Zwischen Frontklappe und Scharnieranordnung (**1**) und / oder zwischen Karosserie und Scharnieranordnung (**1**) ist zumindest ein Deformationselement (**5**) angeordnet, das aufgrund seiner Struktur und seiner Form beim Aufprall eines Fußgängers auf die Frontklappe plastisch verformt wird und dabei Energie absorbiert.

## Beschreibung

Die Erfindung betrifft eine Anordnung einer Frontklappe an einem Fahrzeug gemäß des Oberbegriffs des Patentanspruchs 1.

Um bei einer Kollision eines Fußgängers oder Radfahrers mit einem Kraftfahrzeug das Ausmaß von Verletzungen, insbesondere im Brust- und Kopfbereich, zu minimieren, ist es allgemein bekannt, einen relativ großen Mindestabstand zwischen einer Frontklappe und einer steifen Unterstruktur des Fahrzeugs (Motor, Federbeinaufnahmen, etc.) vorzusehen, sodass ein ausreichender Deformationsweg der Frontklappe zur Verfügung steht, um den Aufprall des Fußgängers oder Radfahrers auf ein verträgliches Maß zu verzögern. Kritisch bleibt allerdings der Bereich der Frontklappe nahe bei Scharnieren, mit denen die Frontklappe an die Karosserie angelenkt ist, da die Frontklappe in diesem Bereich nicht ausreichend deformierbar ist.

Zur Vermeidung dieses kritischen Bereichs ist es aus der JP 2000-108842 A bekannt, zwischen dem Scharnier und der Frontklappe und zwischen dem Scharnier und der Karosserie jeweils ein energieabsorbierendes Element aus einem elastischen Material anzubringen.

Aufgabe der Erfindung ist es, eine einfache Anordnung einer Frontklappe an einem Fahrzeug zu schaffen, die Fußgänger oder Radfahrer bei einer Kollision mit dem Fahrzeug schützt.

Diese Aufgabe wird durch eine Anordnung einer Frontklappe mit den Merkmalen des Patentanspruchs 1 gelöst. Patentanspruch 5 beschreibt ein Verfahren zur Montage einer solchen Anordnung einer Frontklappe.

Erfindungsgemäß ist eine Frontklappe mit zumindest einer Scharniereinrichtung mit der Karosserie verbunden ist, wobei die geschlossene Frontklappe zu den darunter angeordneten Aggregaten einen Mindestabstand aufweist. Zwischen Frontklappe und Scharnieranordnung und / oder zwischen Karosserie und Scharnieranordnung ist zumindest ein Deformationselement angeordnet, das aufgrund seiner Struktur und seiner Form beim Aufprall eines Fußgängers auf die Frontklappe plastisch verformt wird und dabei Energie absorbiert. Derartige Deformationselemente können bereits im Rohbau des Fahrzeugs vor den Lackierprozessen verbaut werden. Im Gegensatz dazu können die bekannten energieabsorbierenden Elemente aus einem elastischen Material erst nach den Lackierprozessen verbaut werden, da die heute bekannten elastischen Materialen nicht die bei den Lackierprozessen herrschenden hohen Temperaturen von annähernd 200 °C standhalten. Auch weisen die elastischen Materialen eine hohe Abhängigkeit von der Temperatur bezüglich Ihrer Elastizität auf. Das erfindungsgemäße Deformationselement dagegen weist keine nennenswerte Abhängigkeit seiner Eigenschaften von der Temperatur auf.

Darüber hinaus kann mit den erfindungsgemäßen Deformationselementen sichergestellt werden, dass eine Deformation erst aber einer einwirkenden Mindestkraft beginnt, danach aber zügig fortschreitet. Die bekannten energieabsorbierenden Elemente aus einem elastischen Material dagegen verformen sich proportional zu den wirkenden Kräften und somit bereits auch schon bei sehr niedrigen Kräften.

Dieselbe Problematik stellt sich auch, wenn die Frontklappe zusätzlich mit einem Klappenschloss mit der Karosserie verbunden ist. Analog zur Scharniereinrichtung kann zur Lösung dieser Problematik auch hier zwischen Klappenschloss und Frontklappe und / oder zwischen Klappenschloss und Karosserie zumindest ein Deformationselement angeordnet sein. Daher umfasst der Begriff Scharniereinrichtung im Sinne dieser Erfindung auch ein Klappenschloss.

Das erfindungsgemäße Deformationselement weist bevorzugt eine wabenförmige Struktur auf. Als wabenförmig im Sinne dieser Erfindung gelten neben sechs- und achteckigen Formen auch ovale und runde Formen. Derartige Strukturen lassen sich preiswert herstellen. Je nach Wahl der Größe, der Anzahl und der Anordnung der Waben und der Dicke und des Materials der Wabenwände lassen sich die Eigenschaften einer solchen Struktur gut an die gewünschte Anwendung anpassen. Alternativ oder ergänzend dazu kann das Deformationselement als Knickelement aufgebaut sein. Das Knickelement weist beispielsweise zumindest ein V- oder L-förmiges Element auf, dessen freie Enden beim Aufprall eines Fußgängers zusammen- oder auseinandergebogen werden. Dies ist eine sehr einfache und damit robuste und kostengünstige Möglichkeit, ein erfindungsgemäßes Deformationselement zu realisieren.

Die Montage einer solchen Anordnung einer Frontklappe an einem Fahrzeug erfolgt idealerweise in zumindest folgenden Montageschritten:
a. Montage der zumindest einen Scharniereinrichtung: Befestigen der Scharniereinrichtung an der Karosserie und an der Frontklappe, sowie gegebenenfalls Einstellen der Scharniereinrichtung,
b. Montage des Deformationselementes, das später zwischen Scharniereinrichtung und Karosserie angeordnet ist: Befestigen des Deformationselementes an der Karosserie einerseits und an der Scharniereinrichtung andererseits,
c. Lösen der Befestigung, mit der die Scharniereinrichtung an der Karosserie befestigt ist.

Es wird also zunächst die Frontklappe so an der Karosserie befestigt, als ob kein Deformationselement vorgesehen ist. Dadurch kann die Frontklappe ganz normal justiert werden. Richtprozesse sind möglich, ohne das Deformationselement zu verformen. Erst danach wird das Deformationselement an die Scharnieranordnung und an die Karosserie montiert, und die Befestigung der Scharniereinrichtung an der Karosserie wieder gelöst. Damit kann je nach Bedarf ein Fahrzeug mit und ohne Fußgängeraufprallschutz gebaut werden, ohne dass unterschiedliche Scharniereinrichtungen und / oder Karosserien zum Einsatz kommen müssen. Bei einem Fahrzeug ohne Fußgängeraufprallschutz entfällt einfach das Deformationselement und die Scharniereinrichtung bleibt an der Karosserie befestigt. Auch kann der Fußgängeraufprallschutz jederzeit nachgerüstet werden, denn es kann auch erst nach dem Rohbau und nach der Lackierung montiert werden, ohne dass die Einstellung der Frontklappe verändert wird.

Nachdem das Deformationselement durch einen Aufprall eines Fußgängers oder Radfahrers auf die Frontklappe plastisch verformt wurde, muss es ausgetauscht werden. Daher sollte es als billiges Bauteil ausgeführt sein, das sich leicht austauschen lässt.

Weitere vorteilhafte Ausgestaltungen sind Gegenstand von Unteransprüchen.

In der Zeichnung ist ein Ausführungsbeispiel der Erfindung dargestellt, anhand dessen die Erfindung im folgenden näher beschrieben wird. Die einzelnen Figuren zeigen in schematischer Darstellungsweise:
- **Fig. 1**: einen Schnitt durch ein Deformationselement unterhalb einer Scharniereinrichtung vor einem Aufprall eines Fußgängers,
- **Fig. 2**: einen Schnitt durch das Deformationselement von **Fig. 1** nach einem Aufprall eines Fußgängers,
- **Fig. 3**: eine weitere Seitenansicht der Anordnung von **Fig. 1** und **Fig. 2** zur Verdeutlichung des Montageablaufs,
- **Fig. 4**: eine Seitenansicht einer Anordnung einer Frontklappe an einem Fahrzeug mit einem Deformationselement zwischen Frontklappe und Scharnieranordnung und
- **Fig. 5**: eine Seitenansicht einer Anordnung einer Frontklappe an einem Fahrzeug mit einem Deformationselement zwischen Scharnieranordnung und Karosserie.

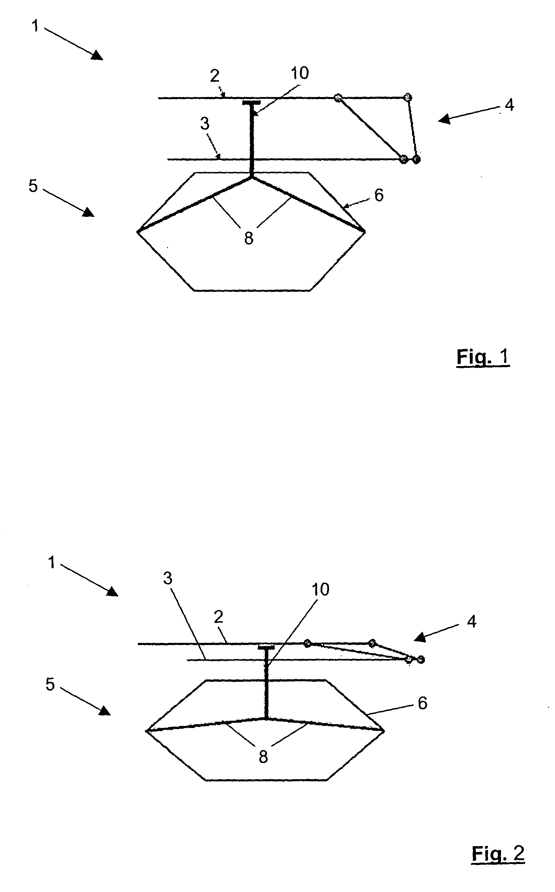

In **Fig.** 1 ist eine Scharniereinrichtung 1 zu sehen, die aus einem Scharnieroberteil 2 und einem Scharnierunterteil 3 besteht, die über ein Viergelenkscharnier 4 miteinander verbunden sind. Unter dem Scharnierunterteil 3 ist ein Deformationselement 5 angebracht. Das Deformationselement 5 besteht aus einer großen sechseckigen Wabe 6 aus Blech und aus einem zusätzlich in der sechseckigen Wabe 6 angeordneten V-förmigen Knickelement aus Blech. Das Knickelement besteht aus zwei annährend gleichgroßen Schenkeln 8, die sich jeweils mit einem Ende in einer der beiden seitlichen Kanten der sechseckigen Wabe 6 abstützen, während ihre anderen Enden miteinander verbunden sind. In diesem Verbindungspunkt ist außerdem ein Stempel 10 angebracht, der senkrecht nach oben durch eine Öffnung in der sechseckigen Wabe 6 und durch eine Öffnung im Scharnierunterteil 3 hindurch bis zum Scharnieroberteil 2 ragt.

Das Scharnieroberteil 2 ist mit einer hier nicht dargestellten Frontklappe verbunden. Wenn nun bei einem Unfall ein Fußgänger oder Radfahrer auf die Frontklappe prallt, wird das Deformationselement 5 zusammengedrückt und dabei plastisch verformt, sodass sich die Frontklappe etwas absenkt. Dadurch wird die Aufprallenergie des Fußgängers oder Radfahrers zumindest teilweise absorbiert. Dies setzt allerdings voraus, dass sich nicht unterhalb der Frontklappe starre Aggregate befinden, die ein Absenken der Frontklappe behindern.

Das zusammengedrückte Deformationselement 5 ist in **Fig.** 2 dargestellt. Die Aufprallenergie wirkt über die Frontklappe direkt auf das Scharnieroberteil 2 und somit auf den Stempel 10 und über das Viergelenkscharnier 4 auch auf das Scharnierunterteil 3. Der Stempel 10 drückt auf die beiden Schenkel 8 des Knickelementes, und versucht, diese auseinander zu biegen. Dadurch und durch die über das Scharnierunterteil 3 direkt auf die sechseckige Wabe 6 wirkenden Kräfte wird die sechseckige Wabe 6 verformt, sodass sie nach dem Aufprall des Fußgängers eine geringere Höhe aufweist. Der zur Energieabsorption zur Verfügung stehende Weg der Frontklappe setzt sich zusammen zum einen aus einem Absenken der gesamten Scharniereinrichtung 1 aufgrund des Zusammendrückens des Deformationselementes 5 und zum anderen aus einem Absenken des Scharnieroberteils 2 zum Scharnierunterteil 3 hin, was aufgrund der Kinematik des Viergelenkscharniers 4 und dem Absenken des zuvor als Anschlag dienenden Stempels 10 möglich ist.

Das Deformationselement 5 kann zusammen mit der Scharniereinrichtung 1 im Rohbau bereits vor den Lackierprozessen verbaut werden, da das Deformationselement 5 nur aus metallischen Werkstoffen besteht, die die hohen Temperaturen während der Lackierprozesse unbeschadet überstehen.

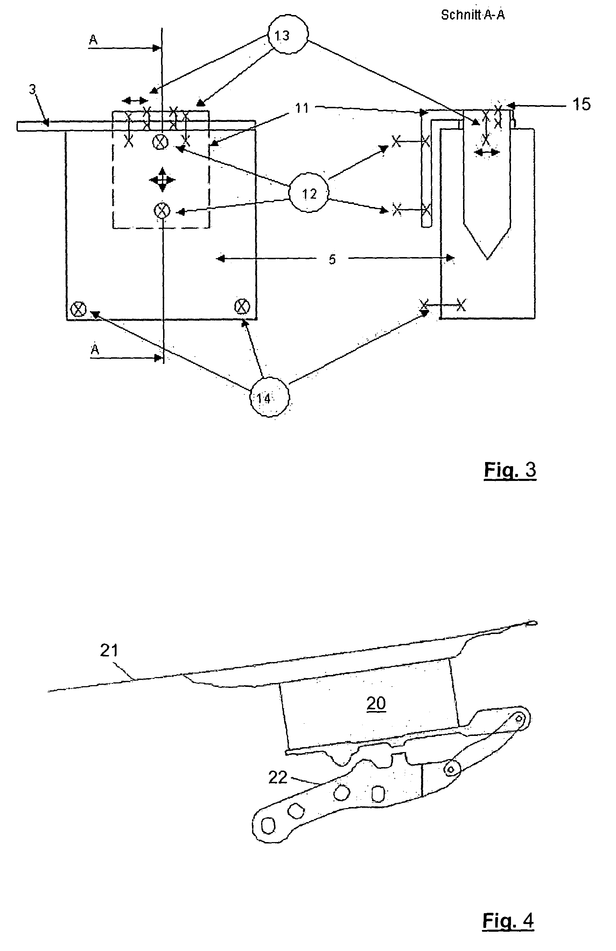

Zur Montage der in **Fig.** 1 und **Fig.** 2 dargestellten Anordnung wird zuerst das Scharnierunterteil 3 der Scharniereinrichtung 1 - wie in **Fig.** 3 dargestellt - mit einem Zusatzwinkel 11 zu einer Vormontageeinheit verschraubt. Danach wird die Vormontageeinheit über das Scharnieroberteil 2 mit der Frontklappe verbunden und über den Zusatzwinkel 11 mit der Karosserie verschraubt. Zur genauen Justage der Frontklappe und zum Ausgleich der Toleranzen der Karosserie und der Frontklappe weisen die Anschraublöcher des Zusatzwinkels 11 einen größeren Durchmesser als die Schrauben 12 auf, mit denen der Zusatzwinkel 11 an der Karosserie verschraubt wird. Auch die Anschraublöcher im Scharnierunterteil 3 weisen aus diesem Grund einen größeren Durchmesser als die Schrauben 12 auf, mit denen das Scharnierunterteil 3 an dem Zusatzwinkel 11 verschraubt wird.

Nach der Justage der Frontklappe wird nun das Deformationselement 5 von unten mit dem Zusatzwinkel 11 mit zwei Schrauben 13 und mit der Karosserie mit ebenfalls zwei Schrauben 14 verschraubt. Zum Schluss werden die Schrauben 12 aus dem Zusatzwinkel 11 lose geschraubt und bilden eine Längsführung in den Langlöchern.

Durch dieses Montageverfahren kann die Frontklappe vollständig vor dem Lackierprozess justiert werden, sodass das Deformationselement 5 nach dem Lackieren nicht mehr in seiner Lage relativ zur Karosserie verändert werden muss. Dadurch kann eine Beschädigung des Lackes ausgeschlossen werden. Wenn das Fahrzeug keinen Fußgängeraufprallschutz haben muss, kann die Montage des Deformationselementes 5 entfallen. Die Scharniereinrichtung 1 ist dann über den Zusatzwinkel 11 fest an der Karosserie angeschraubt.

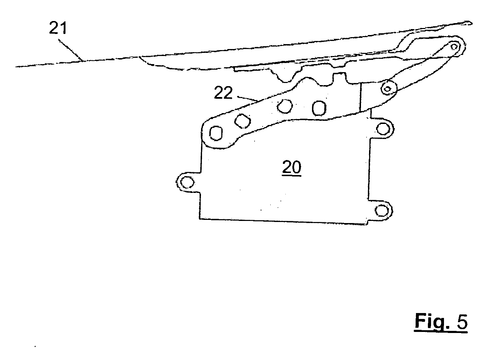

Ganz allgemein kann ein Deformationselement 20 entweder - wie in **Fig.** 4 gezeigt - zwischen einer Frontklappe 21 und einer Scharniereinrichtung 22 oder - wie in **Fig.** 5 dargestellt - zwischen der Scharniereinrichtung 22 und der Fahrzeugkarosserie angeordnet sein. Natürlich ist auch eine Kombination mit einem Deformationselement 20 zwischen der Frontklappe 21 und der Scharniereinrichtung 22 und einem weiteren Deformationselement 20 zwischen der Scharniereinrichtung 22 und der Fahrzeugkarosserie möglich.

## Patentansprüche

1. Anordnung einer Frontklappe an einem Fahrzeug, mit zumindest einer Scharniereinrichtung (1), über die die Frontklappe mit der Karosserie verbunden ist, wobei die geschlossene Frontklappe zu den darunter angeordneten Aggregaten einen Mindestabstand aufweist, **dadurch gekennzeichnet, dass** zwischen Frontklappe und Scharnieranordnung (1) und / oder zwischen Karosserie und Scharnieranordnung (1) zumindest ein Deformationselement (5) angeordnet ist, das aufgrund seiner Struktur und seiner Form beim Aufprall eines Fußgängers auf die Frontklappe plastisch verformt wird und dabei Energie absorbiert.

2. Anordnung nach Anspruch 1, **dadurch gekennzeichnet, dass** das Deformationselement (5) eine wabenförmige Struktur (6) aufweist.

3. Anordnung nach Anspruch 1 oder 2, **dadurch gekennzeichnet, dass** das Deformationselement (5) als Knickelement (7) aufgebaut ist.

4. Anordnung nach Anspruch 3, **dadurch gekennzeichnet, dass** das Knickelement zumindest ein V- oder L-förmiges Element (7) aufweist, dessen freie Enden beim Aufprall eines Fußgängers zusammen- oder auseinandergebogen werden.

5. Verfahren zur Montage einer Anordnung einer Frontklappe an einem Fahrzeug nach einem der vorhergehenden Ansprüche, bestehend aus folgenden Schritten:
a. Montage der zumindest einen Scharniereinrichtung **(1)**: Befestigen der Scharniereinrichtung **(1)** an der Karosserie und an der Frontklappe, sowie gegebenenfalls Einstellen der Scharniereinrichtung **(1)**,
b. Montage des Deformationselementes **(5)**, das später zwischen Scharniereinrichtung **(1)** und Karosserie angeordnet ist: Befestigen des Deformationselementes **(5)** an der Karosserie einerseits und an der Scharniereinrichtung **(1)** andererseits,
c. Lösen der Befestigung **(12)**, mit der die Scharniereinrichtung **(1)** an der Karosserie befestigt ist.

6. Verfahren nach Anspruch 5, **dadurch gekennzeichnet, dass** die Scharniereinrichtung **(1)** mit zumindest einem Zusatzwinkel **(11)** verbunden ist, über den die Scharniereinrichtung **(1)** an der Karosserie angebracht wird, und dass im Schritt c die Befestigung **(12)** zwischen der Scharniereinrichtung **(1)** und dem Zusatzwinkel **(11)** gelöst wird.
